# EUROPÄISCHE PATENTSCHRIFT

(11) **EP 2 343 416 B1**
(45) Veröffentlichungstag und Bekanntmachung des Hinweises auf die Patenterteilung: **24.10.2018**
(21) Anmeldenummer: 10000208.8
(22) Anmeldetag: 12.01.2010
(51) Int. Cl.: E03B 3/18, F04B 47/04, E21B 43/02, E21B 43/12, E21B 43/38, B09C 1/00, E21B 37/08, E03B 3/15, F04B 47/00

(54) **Bohrlochpumpensystem**
Borehole pump system
Système de pompes de trous de forage

(43) Veröffentlichungstag der Anmeldung: 13.07.2011
(73) Patentinhaber: Grundfos Management A/S, 8850 Bjerringbro (DK)
(72) Erfinder: Bach, Jørgen, 8220 Brabrand (DK)
(74) Vertreter: Hemmer, Arnd

(56) Entgegenhaltungen:
- EP-A1- 0 486 976
- EP-A2- 1 178 013
- US-A- 5 701 953
- US-A1- 2003 189 010
- US-A1- 2005 199 551

## Beschreibung

Die Erfindung betrifft ein Bohrlochpumpensystem gemäß dem Oberbegriff des Anspruchs 1.

Bei Bohrlochpumpensystemen zählt es zum Stand der Technik, ein Wasseraufbereitungssystem vorzusehen, um das Förderwasser von Fremdstoffen zu befreien. Bei kalten Witterungsbedingungen besteht jedoch die Gefahr, dass das Wasser im Wasseraufbereitungssystem gefriert. Es ist bekannt, das Wasseraufbereitungssystem deshalb mit einem wärmeisolierenden Gehäuse zu versehen, um das Gefrieren des Wassers zu vermeiden. Dieser zusätzliche Aufwand verteuert das Bohrlochpumpensystem jedoch.

Es ist ferner bekannt, gelöste Fremdstoffe, wie beispielsweise Eisen, aus dem zu pumpenden Wasser auszufällen, da insbesondere Eisenverbindungen augenfällige Verfärbungen auf dem Boden von Wasserbehältnissen verursachen. Zum Ausfällen der Eisenverbindungen wird das Wasser belüftet. Unter ungünstigen Umständen können jedoch die ausgefällten Fremdstoffe das Bohrloch verstopfen, so dass der Betrieb des Bohrlochpumpensystems beeinträchtigt ist.

Aus US2005/199551 A1 ist eine Tauchpumpe mit einer Steigleitung bekannt, wobei in der Steigleitung ein Wasseraufbereitungssystem zum Reinigen des von der Tauchpumpe geförderten Wassers angeordnet ist.

In EP 0 486 976 A1 ist ein Bohrlochpumpensystem mit einer Pumpe beschrieben, die oberhalb der Erdoberfläche angeordnet ist und über eine Steigleitung Grundwasser fördert, wobei in einen Zwischenraum zwischen der Innenwandung des Bohrlochs und einer Außenwandung eines Steigrohrs Mittel zur Wasserreinigung angeordnet sind.

Es ist daher Aufgabe der Erfindung, ein Bohrlochpumpensystem zu schaffen, bei welchem eine Wasseraufbereitung kostengünstig vorgenommen werden kann und bei welchem die Zuverlässigkeit des Betriebs des Bohrlochpumpensystems nicht beeinträchtigt ist.

Diese Aufgabe wird mit einem Bohrlochpumpensystem mit den in Anspruch 1 angegebenen Merkmalen gelöst. Bevorzugte Weiterbildungen der Erfindung sind in den Unteransprüchen, der nachfolgenden Beschreibung und den Zeichnungen angegeben.

Das erfindungsgemäße Bohrlochpumpensystem weist eine Tauchpumpe und eine im Bohrloch aufzunehmende Steigleitung auf. Erfindungsgemäß ist in der Steigleitung ein Wasseraufbereitungssystem zur Reinigung des geförderten Wassers angeordnet. Da somit das Wasseraufbereitungssystem ebenfalls zur Anordnung in dem Bohrloch vorgesehen ist bzw. im Bohrloch aufgenommen wird, ist bei dieser Anordnung das Wasseraufbereitungssystem auf einfache Weise vor Frost geschützt. Zusätzliche Einrichtungen, wie beispielsweise wärmeisolierende Gehäuse oder Abdeckungen sind bei dem erfindungsgemäßen Bohrlochpumpensystem entbehrlich.

Bevorzugt ist bei dem erfindungsgemäßen Bohrlochpumpensystem das Wasseraufbereitungssystem oberhalb der Tauchpumpe angeordnet. Vorteilhaft werden dabei Fremdstoffe gemeinsam mit dem Wasser im Bohrloch aufwärts gefördert, so dass sich diese nicht am Boden des Bohrlochs absetzen. Eine Verstopfung des Bohrlochs durch abgesetzte Fremdstoffe wird so wirksam vermieden. Das erfindungsgemäße Bohrlochpumpensystem lässt sich daher zuverlässig und ausfallsicher betreiben.

Bei dem erfindungsgemäßen Bohrlochpumpensystem weist das Wasseraufbereitungssystem einen Belüfter auf. So können durch die Belüftung des Wassers mittels des Belüfters z. B. gelöstes Eisen und/oder Eisenverbindungen leicht aus dem Wasser ausgefällt werden. Da gemäß der Erfindung der Belüfter innerhalb der Steigleitung und insbesondere oberhalb der Tauchpumpe angeordnet ist, strömen die ausgefällten Fremdstoffe aufwärts, so dass durch die ausgefällten Fremdstoffe kein Bodensatz und somit keine Verstopfung des Bohrlochs verursacht wird. Auch bei Belüftung des gepumpten Wassers lässt sich das Bohrlochpumpensystem folglich zuverlässig und ausfallsicher betreiben.

Ferner umfasst das Wasseraufbereitungssystem bei dem erfindungsgemäßen Bohrlochpumpensystem eine Belüftungsstrecke, welche einen Teil der Steigleitung bildet, durch die das Wasser gefördert wird. Vorzugsweise macht die Belüftungsstrecke mehr als ein, insbesondere mehr als zwei Drittel der vertikalen Erstreckung der Steigleitung im Bohrloch aus. Diese Weiterbildung der Erfindung ermöglicht einen besonders kompakten Aufbau des Bohrlochpumpensystems, da die Steigleitung zugleich sowohl eine Förderstrecke als auch eine Belüftungsstrecke des Bohrlochpumpensystems bildet.

Vorteilhafterweise umfasst bei dem erfindungsgemäßen Bohrlochpumpensystem das Wasseraufbereitungssystem zumindest einen Wasserfilter. Erfindungsgemäß ist dabei der Wasserfilter in der Steigleitung und insbesondere oberhalb, das heißt stromabwärts, der Tauchpumpe angeordnet. Bei der erfindungsgemäßen Tauchpumpe filtert der Wasserfilter Fremdstoffe somit in der Steigleitung und oberhalb des Bohrlochbodens aus dem Förderwasser heraus. Der Wasserfilter bedingt somit keinen Bodensatz herausgefilterter Fremdstoffe am Boden des Bohrlochs, so dass auch in dieser Hinsicht erfindungsgemäß eine Verstopfung des Bohrlochs verhindert wird und die Betriebszuverlässigkeit des Bohrlochpumpensystems gewährleistet ist.

Zweckmäßigerweise ist bei dem erfindungsgemäßen Bohrlochpumpensystem der Wasserfilter innerhalb, insbesondere nah oder direkt an dem oberen Ende, des Bohrlochs angeordnet. Zum einen wird bei der Anordnung des Wasserfilters nah dem oberen Ende des Bohrlochs eine möglichst lange Belüftungsstrecke und folglich eine gründliche Reinigung des Förderwassers realisiert. Zum anderen kann der Wasserfilter einfach, beispielsweise zur Reinigung, ausgewechselt werden, da der Wasserfilter zur Entnahme bzw. zum Einsetzen lediglich entlang eines kurzen Teilstücks der Gesamtlänge der Steigleitung aus dem Bohrloch gehoben bzw. in dieses eingelassen werden muss.

Bevorzugt ist bei dem erfindungsgemäßen Bohrlochpumpensystem der Wasserfilter ein Metallfilter. Alternativ oder zusätzlich ist der Wasserfilter bevorzugt ein Mineralfilter und/oder ein Kerzenfilter.

Geigneterweise ist der Wasserfilter spülbar, insbesondere rückspülbar.

Zweckmäßigerweise ist bei dem erfindungsgemäßen Bohrlochpumpensystem eine Spüleinrichtung zum Spülen des Wasserfilters mit Druckluft und/oder Druckwasser vorgesehen.

Besonders bevorzugt weisen bei dem erfindungsgemäßen Bohrlochpumpensystem die Spüleinrichtung und der Belüfter eine gemeinsame Druckluftquelle auf.

In einer bevorzugten Weiterbildung der Erfindung ist die Steigleitung zumindest stromaufwärts des Wasserfilters mindestens teilweise flexibel. In dieser Weiterbildung der Erfindung sind Teile der Steigleitung vorteilhaft gegeneinander beweglich, so dass ein Verstopfen der Steigleitung durch Fremdstoffe vermieden wird. Insbesondere kann der Wasserfilter bei einer flexiblen oder teilflexiblen Ausbildung der Steigleitung stromaufwärts des Wasserfilters zuverlässig rückgespült werden, wobei keine Gefahr der Verstopfung der Steigleitung durch im Wasserfilter zurückgehaltene Fremdstoffe besteht. Vielmehr wird in dieser Weiterbildung der Erfindung die Steigleitung bereits durch die sowohl im normalen Betrieb als auch bei der Rückspülung des Wasserfilters stets erfolgende Durchströmung mit Wasser gleichzeitig gereinigt.

Geeigneterweise weist das Bohrlochpumpensystem einen Auslass auf, der zum Auslassen von im Wasserfilter zurückgehaltenen Rückständen ausgebildet ist. Zweckmäßigerweise ist der Auslass am oberen Ende der Steigleitung angeordnet. Vorteilhaft weist das Bohrlochpumpensystem einen von einem stromaufwärts des Wasserfilters befindlichen Bereich zum Auslass aufwärts führenden Strömungspfad auf. Beim Rückspülen des Filters lassen sich dann die im Wasserfilter zurückgehaltenen Fremdstoffe gemeinsam mit Wasser durch diesen Strömungspfad zum Auslass treiben, so dass auch beim Rückspülen des Wasserfilters am Boden des Bohrlochs kein Bodensatz an ausgefällten Fremdstoffen gebildet wird. Damit besteht auch beim Rückspülen des Wasserfilters keine Gefahr einer Verstopfung des Bohrlochs durch im Wasserfilter zurückgehaltene Fremdstoffe.

In einer bevorzugten Weiterbildung des Bohrlochpumpensystems ist bzw. sind stromauf- und/oder stromabwärts des Wasserfilters Druckmesser vorgesehen. Auf diese Weise lässt sich die Wasserdurchlässigkeit des Wasserfilters kontinuierlich und automatisch überwachen. Beispielsweise weist ein hoher stromaufwärts des Wasserfilters herrschender Druck bzw. korrespondierend damit ein niedriger stromabwärts des Wasserfilters herrschender Druck auf eine Verstopfung des Wasserfilters hin. Sind stromauf- und stromabwärts des Wasserfilters Druckmesser vorgesehen, werden die erfassten Drücke zweckmäßigerweise miteinander mittels einer Auswerteeinheit, die dazu mit den Druckmessern signalverbunden ist, verglichen. Alternativ oder zusätzlich vergleicht die Auswerteeinheit stromauf- und/oder stromabwärts des Wasserfilters gemessene Drücke mit Normdruckwerten oder Normdruckwertbereichen, wobei bei einer Abweichung des erfassten Drucks bzw. der erfassten Drücke von den Normdruckwerten oder Normdruckwertbereichen eine Verstopfung des Wasserfilters signalisiert wird.

Beispielsweise ist bei dem erfindungsgemäßen Bohrlochpumpensystem eine Steuereinrichtung vorgesehen, die zum Erfassen des oder der mit dem bzw. den Druckmessern gemessenen Drucks bzw. Drücke und zur Steuerung/Einleitung der Spülung des Wasserfilters in Abhängigkeit des oder der erfassten Drücke ausgebildet ist. Bevorzugt weist die Steuereinrichtung dabei eine Auswerteeinheit wie oben beschrieben auf. In dieser Weiterbildung kann das Bohrlochpumpensystem gewissermaßen selbstwartend ausgebildet sein. Falls die Auswertung des oder der mit den Druckmessern gemessenen Drücke durch die Auswerteeinheit eine verringerte Wasserdurchlässigkeit des Wasserfilters signalisiert, kann die Steuereinrichtung die Spülung des Wasserfilters einleiten bzw. steuern.

Nachfolgend ist die Erfindung anhand eines in den Figuren dargestellten Ausführungsbeispiels näher erläutert. Es zeigen:
- Fig. 1: den schematischen Aufbau des Bohrlochpumpensystems in einer Prinzipskizze (nicht maßstabsgerecht) und
- Fig. 2: das Bohrlochpumpensystem in einer vereinfachten längsgeschnittenen Darstellung.

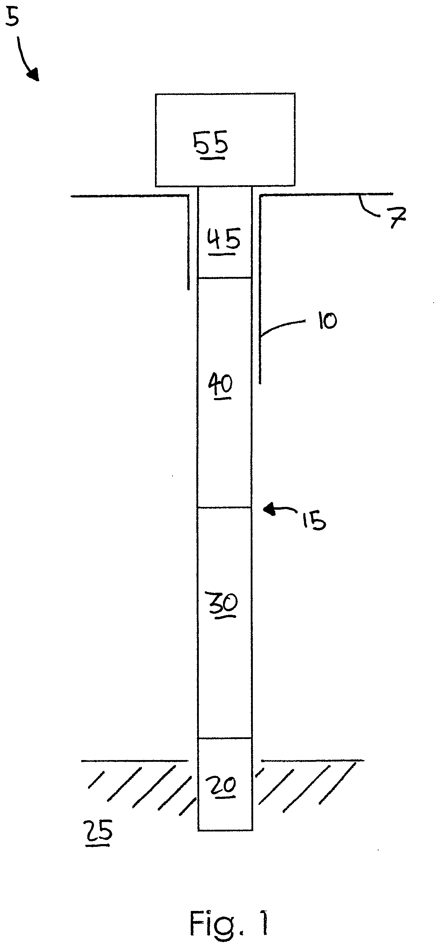

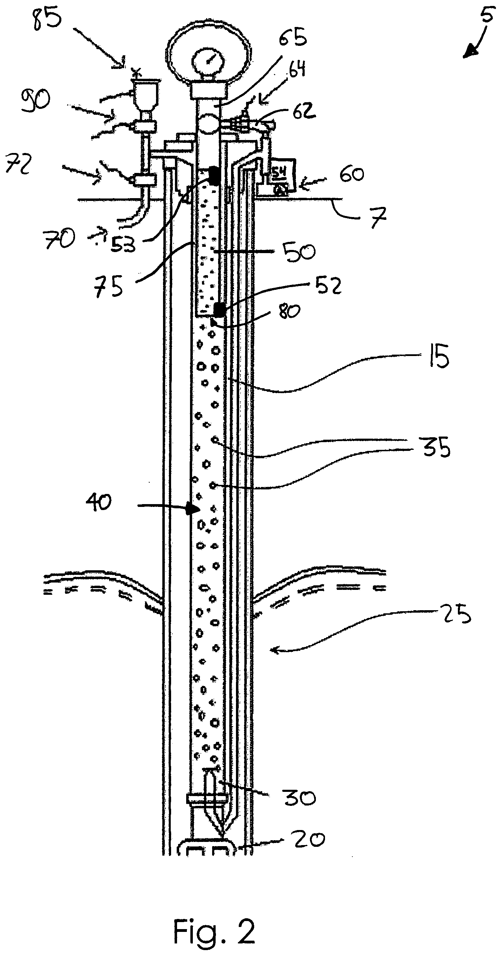

Das in den Fig. 1 und 2 dargestellte Bohrlochpumpensystem 5 ist an einem sich vertikal, d.h. senkrecht zum Erdboden 7, erstreckenden Bohrloch 10 angeordnet und bildet ein Grundwasserpumpensystem, hier einen Brunnen.

Das Bohrlochpumpensystem 5 weist eine im Bohrloch 10 angeordnete Steigleitung 15 auf. Am unteren Ende der Steigleitung 15 ist eine Tauchpumpe 20 angeschlossen, welche Grundwasser aus der Grundwasserschicht 25 durch die Steigleitung 15 aufwärts in einen Brunnenkopf 55 pumpt. Oberhalb der Tauchpumpe 20 ist ein Belüfter 30 angeordnet, welcher Luft in die Steigleitung 15 einspeist. Die eingespeiste Luft bildet im aufsteigenden Wasser Blasen 35, welche entlang einer Belüftungsstrecke 40 mit dem geförderten Wasser wechselwirken. Die Belüftungsstrecke 40 macht dabei mehr als zwei Drittel der vertikalen Erstreckung der Steigleitung 15 (Fig. 2) aus. Durch die Belüftung mit dem Belüfter 30 formen im Wasser gelöstes Eisen und/oder Eisenverbindungen zunächst kolloidale Partikel, welche nachfolgend immer größere und schließlich nicht mehr im Wasser gelöste und damit aus dem Wasser filterbare Partikel formen.

Zur Filterung dieser Partikel aus dem Förderwasser ist oberhalb der Belüftungsstrecke 40 am oberen Ende des Bohrlochs 10 ein Wasserfilter 45 vorhanden. Der Wasserfilter 45 ist in diesem Ausführungsbeispiel ein Metallfilter in Form eines Kerzenfilters mit einer Filterkerze 50 und rückspülbar ausgebildet.

Der Wasserfilter 45 weist Druckmesser 52, 53 auf, die stromaufwärts und stromabwärts der Filterkerze 50 des Wasserfilters 45 angeordnet sind. Die Druckmesser 52, 53 sind dabei mit einer Steuereinrichtung 54 signalverbunden, die die Druckwerte stromaufwärts und stromabwärts der Filterkerze 50 des Wasserfilters 45 überwacht und bei Abweichung dieser Druckwerte von einem Normdruckwertebereich oder bei Überschreiten einer bestimmten Druckdifferenz oder eines Druckverhältnisses dieser Druckwerte auf Verstopfen des Wasserfilters 45 schließt und dann die Rückspülung des Wasserfilters 45 wie unten beschrieben einleitet. Die Steigleitung 15 ist bei dem Bohrlochpumpensystem 5 als flexibler Schlauch ausgebildet, sodass sich in der Steigleitung 15 bei der Rückspülung des Wasserfilters 45 keine Partikel dauerhaft festsetzen können. Die Bewegungen der Schlauchwandungen verhindern ein Festsetzen von Partikeln und Verunreinigungen.

Oberhalb des oberen Randes des Bohrlochs 10 schließt das Bohrlochpumpensystem 5 mit dem Brunnenkopf 55 ab. Der Brunnenkopf 55 weist eine Druckluftquelle in Gestalt eines Luftkompressors 60 auf, die den Belüfter 30 mit Druckluft speist. Ferner ist der Luftkompressor 60 über eine Zuleitung 62 und ein in dieser angeordnetes Ventil 64 mit einem stromabwärts und oberhalb des Wasserfilters 45 gelegenen Bereich 65 des Wasserfilters 45 verbunden. Die Speisung dieses stromabwärts des Wasserfilters 45 befindlichen Bereiches 65 mit Druckluft erlaubt eine Rückspülung des Wasserfilters 45. Zur Rückspülung des Wasserfilters 45 werden der stromabwärts befindliche Bereich 65 des Wasserfilters 45 mit Druckluft gespeist und die im Wasserfilter 45 zurückgehaltene Fremdstoffe zur stromaufwärts gewandten Seite 80 des Wasserfilters 45 hin ausgespült. Die ausgespülten Fremdstoffe werden zusammen mit Wasser entlang eines vertikal an der Außenseite der Filterkerze 50 des Wasserfilters 45 entlang aufwärts führenden Strömungspfades 75 in den Brunnenkopf 55 geschwemmt, aus welchem sie über eine Auslassleitung 70 des Brunnenkopfes 55 ausgelassen werden können. Die Auslassleitung 70 weist dazu eine mit dem Luftkompressor 60 verbundene Drucklufteinspeisung 85 mit einem Ventil 90 auf, die bei geöffnetem Ventil 90 Druckluft vom Luftkompressor 60 in die Auslassleitung 70 einspeist. Die Auslassleitung 70 weist ferner ein Ventil 72 auf, welches zum Auslass der Fremdstoffe durch die Auslassleitung 70 öffnend gestellt werden kann. Über die mittels der Drucklufteinspeisung 85 eingespeiste Druckluft können die in den Brunnenkopf 55 aufgeschwemmten Rückstände durch die Auslassleitung 70 ausgetrieben werden. Die Rückspülung des Wasserfilters 45 wird dabei durch die Steuereinrichtung 54 eingeleitet und gesteuert, die dazu zur Stellung der Ventile 64, 72 und 90 mit diesen signalverbunden ist.

### Bezugszeichenliste

- 5: - Bohrlochpumpensystem
- 7: - Erdboden
- 10: - Bohrloch
- 15: - Steigleitung
- 20: - Tauchpumpe
- 30: - Belüfter
- 35: - Blasen
- 40: - Belüftungsstrecke
- 45: - Wasserfilter
- 50: - Filterkerze
- 52: - Druckmesser
- 53: - Druckmesser
- 54: - Steuereinrichtung
- 55: - Brunnenkopf
- 60: - Luftkompressor
- 62: - Zuleitung
- 64: - Ventil
- 65: - Bereich
- 70: - Auslassleitung
- 72: - Ventil
- 75: - Strömungspfad
- 80: - Seite
- 85: - Drucklufteinspeisung
- 90: - Ventil

## Patentansprüche

1. Bohrlochpumpensystem mit einer Tauchpumpe (20), einer im Bohrloch (10) aufzunehmenden Steigleitung (15) und mit einem oberhalb des oberen Randes des Bohrlochs (10) das Bohrlochpumpensystem abschließenden Brunnenkopf (55), wobei in der Steigleitung ein Wasseraufbereitungssystem zur Reinigung des geförderten Wassers angeordnet ist, **dadurch gekennzeichnet, dass** das Wasseraufbereitungssystem einen Belüfter (30) und eine Belüftungsstrecke (40) umfasst, die mehr als ein, insbesondere mehr als zwei Drittel der vertikalen Erstreckung der Steigleitung (15) im Bohrloch (10) ausmacht.

2. Bohrlochpumpensystem nach Anspruch 1, **dadurch gekennzeichnet, dass** das Wasseraufbereitungssystem oberhalb der Tauchpumpe (20) angeordnet ist.

3. Bohrlochpumpensystem nach einem der Ansprüche 1 oder 2, **dadurch gekennzeichnet, dass** das Wasseraufbereitungssystem zumindest einen Wasserfilter (45) umfasst.

4. Bohrlochpumpensystem nach Anspruch 3, **dadurch gekennzeichnet, dass** der Wasserfilter (45) innerhalb, insbesondere nah oder direkt an dem oberen Ende, des Bohrlochs (10) angeordnet ist.

5. Bohrlochpumpensystem nach Anspruch 3 oder 4, **dadurch gekennzeichnet, dass** der Wasserfilter (45) ein Metall- und/oder Mineralfilter und/oder ein Kerzenfilter ist.

6. Bohrlochpumpensystem nach einem der Ansprüche 3 bis 5, **dadurch gekennzeichnet, dass** der Wasserfilter (45) spülbar, insbesondere rückspülbar, ist.

7. Bohrlochpumpensystem nach Anspruch 6, **gekennzeichnet durch** eine Spüleinrichtung zum Spülen des Wasserfilters (45) mit Druckluft und/oder Druckwasser.

8. Bohrlochpumpensystem nach Anspruch 7, **dadurch gekennzeichnet, dass** Spüleinrichtung und Belüfter (30) eine gemeinsame Druckluftquelle (60) aufweisen.

9. Bohrlochpumpensystem nach einem der Ansprüche 3 bis 8, **dadurch gekennzeichnet, dass** die Steigleitung (15) zumindest stromaufwärts des Wasserfilters (45) mindestens teilweise flexibel ist.

10. Bohrlochpumpensystem nach einem der Ansprüche 3 bis 9, **gekennzeichnet durch** einen Auslass (70), der zum Auslassen von im Wasserfilter (45) zurückgehaltenen Rückständen ausgebildet ist.

11. Bohrlochpumpensystem nach einem der Ansprüche 3 bis 10, **dadurch gekennzeichnet, dass** stromauf- und/oder -abwärts des Wasserfilters (45) Druckmesser (52, 53) vorgesehen sind.

12. Bohrlochpumpensystem nach Anspruch 11, **dadurch gekennzeichnet, dass** eine Steuereinrichtung (54) vorgesehen ist, die zum Erfassen des mit den Druckmessern (52, 53) gemessenen Drucks und zur Steuerung/Einleitung der Spülung des Wasserfilters (45) in Abhängigkeit der erfassten Drücke ausgebildet ist.

## Claims

1. A borehole pump system with a submersible pump (20), with a riser (15) which is to be received in the borehole (10) and with a well head (55) which terminates the borehole pump system above the upper edge of the borehole (10), wherein a water treatment system for purifying the delivered water is arranged in the riser, **characterised in that** the water treatment system comprises an aerator (30) and an aerating stretch (40) which makes up more than one third, in particular more than two thirds of the vertical extension of the riser (15) in the borehole (10).

2. A borehole pump system according to claim 1, **characterised in that** the water treatment system is arranged above the submersible pump (20).

3. A borehole pump system according to one of the claims 1 or 2, **characterised in that** the water treatment system comprises at least one water filter (45).

4. A borehole pump system according to claim 3, **characterised in that** the water filter (45) is arranged within the borehole (10), in particular close or directly on the upper end of the borehole (10).

5. A borehole pump system according to claim 3 or 4, **characterised in that** the water filter (45) is a metal filter and/or mineral filter and/or a candle filter.

6. A borehole pump system according to one of the claims 3 to 5, **characterised in that** the water filter (45) can be flushed, in particular can be back-flushed.

7. A borehole pump system according to claim 6, **characterised by** a flushing device for flushing the water filter (45) with pressurised air and/or pressurised water.

8. A borehole pump system according to claim 7, **characterised in that** the flushing device and the aerator (30) comprise a common pressurised air source (60).

9. A borehole pump system according to one of the claims 3 to 8, **characterised in that** the riser (15) is at least partly flexible, at least upstream of the water filter (45).

10. A borehole pump system according to one of the claims 3 to 9, **characterised by** an outlet (70) which is designed for letting out residues which are held back in the water filter (45).

11. A borehole pump system according to one of the claims 3 to 10, **characterised in that** pressure gauges (52, 53) are provided upstream and/or downstream of the water filter (45).

12. A borehole pump system according to claim 11, **characterised in that** a control device (54) is provided, said control device being designed for acquiring the pressure which is measured with the pressure gauges (52, 53) and for controlling/initiating the flushing of the water filter (45) in dependence on the acquired pressures.

## Revendications

1. Système de pompe à trou de forage comportant une pompe immergée (20), une colonne montante (15) devant être logée dans le trou de forage (10), et comportant une tête de puits (55) terminant le système de pompe à trou de forage au-dessus du bord supérieur du trou de forage (10), dans lequel un système de traitement d'eau destiné au nettoyage de l'eau transportée est agencé dans la colonne montante, **caractérisé en ce que** le système de traitement d'eau comprend un aérateur (30) et un trajet d'aération (40), qui représente plus d'un, en particulier plus de deux, tiers de l'extension verticale de la colonne montante (15) dans le trou de forage (10).

2. Système de pompe à trou de forage selon la revendication 1, **caractérisé en ce que** le système de traitement d'eau est agencé au-dessus de la pompe immergée (20).

3. Système de pompe à trou de forage selon l'une des revendications 1 ou 2, **caractérisé en ce que** le système de traitement d'eau comprend au moins un filtre à eau (45).

4. Système de pompe à trou de forage selon la revendication 3, **caractérisé en ce que** le filtre à eau (45) est agencé à l'intérieur, en particulier près de ou directement au niveau de l'extrémité supérieure du trou de forage (10).

5. Système de pompe à trou de forage selon la revendication 3 ou 4, **caractérisé en ce que** le filtre à eau (45) est un filtre métallique et/ou minéral et/ou un filtre en forme de bougie.

6. Système de pompe à trou de forage selon l'une des revendications 3 à 5, **caractérisé en ce que** le filtre à eau (45) peut être rincé, en particulier rincé à contre-courant.

7. Système de pompe à trou de forage selon la revendication 6, **caractérisé par** un dispositif de rinçage pour le rinçage du filtre à eau (45) avec de l'air comprimé et/ou de l'eau sous pression.

8. Système de pompe à trou de forage selon la revendication 7, caractérisé en que le dispositif de rinçage et l'aérateur (30) présentent une source d'air comprimé (60) commune.

9. Système de pompe à trou de forage selon l'une des revendications 3 à 8, **caractérisé en ce que** la colonne montante (15) est flexible au moins en partie au moins en amont du filtre à eau (45).

10. Système de pompe à trou de forage selon l'une des revendications 3 à 9, **caractérisé par** une sortie (70) qui est conçue pour la sortie de résidus retenus dans le filtre à eau (45).

11. Système de pompe à trou de forage selon l'une des revendications 3 à 10, **caractérisé en ce que** des manomètres (52, 53) sont prévus en amont et/ou en aval du filtre à eau (45).

12. Système de pompe à trou de forage selon la revendication 11, **caractérisé en ce qu'**est prévu un dispositif de commande (54), qui est conçu pour détecter la pression mesurée avec les manomètres (52, 53) et pour commander/initier le rinçage du filtre à eau (45) en fonction des pressions détectées.
